# EUROPEAN PATENT SPECIFICATION

(11) **EP 2 105 372 B1**
(45) Date of publication and mention of the grant of the patent: **05.01.2011**
(21) Application number: 09003297.0
(22) Date of filing: 06.03.2009
(51) Int. Cl.: B62D 21/15

(54) **Frame structure for an automotive vehicle, automotive vehicle provided therewith and method for providing a frame structure**
Rahmenstruktur für ein Automobil, damit ausgerüstetes Automobil und Verfahren zum Bereitstellen einer Rahmenstruktur
Structure de cadre pour véhicule automobile, véhicule automobile fourni avec celle-ci et procédé pour fournir une structure de cadre

(30) Priority: 28.03.2008 JP 2008085191
(43) Date of publication of application: 30.09.2009
(73) Proprietor: Mazda Motor Corporation, Fuchu-cho Aki-gun Hiroshima 730-8670 (JP)
(72) Inventor: Honji, Hiromasa, Aki-gun Hiroshima 730-8670 (JP); Takeshita, Hiroaki, Aki-gun Hiroshima 730-8670 (JP); Watanabe, Michinari, Aki-gun Hiroshima 730-8670 (JP)
(74) Representative: Müller-Boré & Partner Patentanwälte

(56) References cited:
- EP-A- 1 149 756
- JP-A- 2003 220 977
- US-A- 5 984 403
- US-A1- 2003 075 951

## Description

The present invention relates to a frame structure for an automotive vehicle, to an automotive vehicle provided therewith and to a method for providing a frame structure for or on a vehicle, and in particular, relates to a structure and method for impact absorption.

Japanese Patent Laid-Open Publication No. 2003-220977, for example, discloses a frame structure of an automotive vehicle, in which there is provided a frame member which extends substantially straightly in at vehicle longitudinal direction and connects to a dash panel at its rear end portion, the frame member having a bend portion which is operative to bend in a vehicle width direction when a longitudinal impact load acts thereon. According to this structure, an impact energy inputted to the frame member is absorbed by bending of the frame member.

Herein, according to the structure disclosed in the above-described patent publication, since the frame member has a closed cross section which extends in the longitudinal direction, the amount of energy absorption may be greater at a bending start compared to a case in which the frame member has no closed cross section. However, the increase degree of this amount of energy absorption tends to reduce considerable after the bending start, so that there is a concern that the impact energy could not be absorbed properly.

Document EP 1 149 756 A2 on what base the preambles of independent claims 1 and 12 are founded, discloses a body structure of a vehicle having a cabin and front and rear compartments which includes a pair of laterally spaced frame members extending forwardly of the cabin at sides of the front compartment. The side frame members include widthwise rigidity lowering sections, respectively, to allow inward bending of a rear section of each side frame member in a widthwise direction to provide an increased collapsible stroke for thereby effectively absorbing energy in a wide range, typically in a frontal impact.

Document US 2003/0075951 A1 discloses a body frame structure for vehicle, comprising at least one body frame which includes a brittle section which is formed at a predetermined section in a lengthwise direction of the body frame, wherein the brittle section is more brittle than other sections of the body frame wherein the brittle section is hardened by a hardening treatment so as to become approximately equal to the other sections of the body frame in axial compressive strength.

Document US 5,984,403 discloses a frame structure for vehicle body with a frame having a box-shaped cross section and a portion bendable when a collision load is applied in a longitudinal direction of the frame in case of a vehicle collision. The frame structure comprises a pair of bead portions arranged in a roughly V shape and formed on a least one of two opposite surfaces of the frame in such a direction that a bending moment generated at that bendable portion of the frame can be cancelled by an additional moment generated by the pair of the bead portions in case of a vehicle collision.

An object of the present invention is to properly increase the amount of energy absorption even after the bending start of the frame member.

The object is solve according to the present invention by the features of the independent claims. Preferred embodiments of the present invention are subject of the dependent claims.

According to the present invention, there is provided a frame structure for an automotive vehicle, comprising a hollow frame member provided so as to extend substantially in a vehicle longitudinal direction and connect to a dash panel at a rear end portion thereof, the frame member having both-side side face portions and upper and lower horizontal face portions so as to have a substantially-rectangular cross section, the frame member having a bend portion which is operative to bend toward one side substantially in a vehicle width direction when a longitudinal impact load acts thereon, and at least one reinforcement member provided inside the frame member at a space which includes the bend portion of the frame member in such a manner that the reinforcement member is off an inner face of one of the side face portions of the frame member which is located on a side opposite to the one side toward which the bend portion bends in an initial state and the reinforcement member comes to contact the inner face of the one of the side face portions of the frame member as the frame member bends at the bend portion during an action of the impact load.

According to the present invention, the reinforcement member provided inside the frame member at the space including the bend portion of the frame member contacts the inner face of the one of the side face portions of the frame member as the frame member bends at the bend portion during the action of the impact load. Thereby, the bending of the frame member can be properly restrained from progressing abruptly after contacting. Further, since the reinforcement member is deformed after the contacting, the amount of energy absorption can be properly increased with the deformation of the reinforcement member.

According to an embodiment of the present invention, the reinforcement member is configured such that a portion thereof which is operative to come to contact the frame member is located at a position which is closer to the one of the side face portions of the frame member than the other of the side face portions of the frame member. Thereby, the contacting of the reinforcement member and the frame member can be made occur as properly soon as possible. Thus, the amount of energy absorption can be increased further properly.

According to another embodiment of the present invention, the reinforcement member comprises both-side side face portions and a horizontal face portion which is provided at either a lower side or an upper side between the both-side side face portions thereof so as to have a U-shaped or reverse-U-shaped cross section, and the reinforcement member is configured such that one of the side face portions of the reinforcement member which is located on the one side toward which the bend portion bends is joined to the one of the side face portions of the frame member and the other of the side face portions of the reinforcement member comes to contact the inner face of the one of the side face portions of the frame member as the bend portion bends during the action of the impact load. Thereby, the increase of the energy absorption can be achieved with a simpler structure of the reinforcement member. Further, the one of the side face portions of the reinforcement member may be easily attached to the one of the side face portions of the frame member via welding.

According to another embodiment of the present invention, the reinforcement member is attached to the one of the side face portions of the frame member in such a manner that a closed cross section is formed together with the one of the side face portions of the frame member. Thereby, the rigidity of the reinforcement member is increased, so that the amount of energy absorption with the contacting can be further increased.

According to another embodiment of the present invention, the reinforcement member is attached to the one of the side face portions of the frame member in such a manner that a closed cross section is formed therewith singly. Thereby, the increase of the amount of energy absorption can be achieved regardless of the shape, thickness or the like of the frame member.

According to another embodiment of the present invention, the reinforcement member forms two closed cross sections together with the frame member or singly in such a manner that the two closed cross sections extend in the vehicle longitudinal direction and overlap with each other in the vehicle width direction. Thereby, the amount of energy absorption with the contacting can be further increased. Further, since the two closed cross sections overlap with each other in the vehicle width direction, the rigidity for the bending in the vehicle width direction is not increased improperly compared to a case in which the two closed cross sections are configured to overlap with each other in the vertical direction. Thus, the proper energy absorption can be achieved even in a case in which the frame member has a relatively narrow width.

According to another embodiment of the present invention, the frame member is comprised of a pair of frame members which are located away from each other in the vehicle width direction, a vehicle constituting member is provided between the pair of frame members, and the pair of frame members have respective bend portions which are operative to bend outward of the vehicle respectively. Thereby, the frame member which has bent does not contact the vehicle constituting member. Thus, the impact energy can be properly absorbed avoiding any contact with the vehicle constituting member provided between the frame members.

According to another embodiment of the present invention, the bend portion of the frame member comprises a bead which is formed at the one of the side face portions of the frame member so as to extend substantially vertically in such a manner that the bead is recessed toward the one side in the vehicle width direction which is a bending direction of the bend portion. Thereby, the bending point or direction can be stabilized.

According to another embodiment of the present invention, at least one reinforcement member is provided substantially in the vehicle longitudinal direction in such a manner that a front end portion thereof connects to the frame member at a location which is right behind a rear end of the reinforcement member and a rear end portion thereof connects to a vehicle-body constituting member behind the frame member. Thereby, the rear end portion of the frame member can be reinforced. Further, part of the energy absorption can be performed by the reinforcement member, so that flexibility of setting the longitudinal length of the reinforcement member and the like can be improved.

According to another embodiment of the present invention, the bend portion of the frame member is comprised of a plurality of portions which have different bending amounts, and the reinforcement member is provided only for one of the portions which has the greatest bending amount. Thereby, the amount of energy absorption can be increased efficiently with restraint of the weight increase caused by the reinforcement member.

According to the invention, there is further provided an automotive vehicle comprising a frame structure according to the invention or a preferred embodiment thereof.

According to the invention, there is further provided a method of providing a frame structure for an automotive vehicle, in particular according to the invention or a preferred embodiment thereof, or a method for absorbing energy upon a load acting thereon comprising the steps of:
providing a hollow frame member so as to extend substantially in a vehicle longitudinal direction and connect to a dash panel at a rear end portion thereof, the frame member having both-side side face portions and upper and lower horizontal face portions so as to have a substantially-rectangular cross section, the frame member having a bend portion which is operative to bend toward one side substantially in a vehicle width direction when a longitudinal impact load acts thereon; and
providing at least one reinforcement member inside said frame member at a space which includes the bend portion of the frame member in such a manner that the reinforcement member is off an inner face of one of the side face portions of the frame member which is located on a side opposite to said one side toward which the bend portion bends in an initial state and the reinforcement member comes to contact the inner face of the one of the side face portions of the frame member as the frame member bends at the bend portion during an action of the impact load.

Other features, aspects, and advantages of the present invention will become apparent from the following description which refers to the accompanying drawings. It should be understood that even though embodiments are separately described, single features thereof may be combined to additional embodiments.
FIG. **1** is a perspective view showing a frame structure of an automotive vehicle according to a first embodiment of the present invention, when viewed from the vehicle front.
FIG. **2** is a view along an arrow A of FIG. **1****.**
FIG. **3** is a view along an arrow B of FIG. **2****.**
FIG. **4** is a sectional view taken along line C-C of FIG. **2****.**
FIG. **5** is a sectional view taken along line D-D of FIG. **2****.**
FIG. **6** is an explanatory diagram of an action of bending of a front side frame.
FIG. **7** is a sectional view taken along line E-E of FIG. **2** at the bending of the front side frame.
FIG. **8** is a sectional view taken along line C-C of FIG. **2** at the bending of the front side frame.
FIG. **9A** is a load characteristic diagram and FIG. **9B** is an energy-absorption-amount characteristic diagram at the bending of the front side frame.
FIG. **10** is a sectional view according to a second embodiment, which corresponds to FIG. **4****.**
FIG. **11** is a sectional view according to a third embodiment, which corresponds to FIG. **4****.**
FIG. **12** is a sectional view according to a fourth embodiment, which corresponds to FIG. **4****.**
FIG. **13** is a sectional view according to a fifth embodiment, which corresponds to FIG. **4****.**

Hereinafter, a front body structure for an automotive vehicle according to preferred embodiments of the present invention will be described.

### EMBODIMENT 1

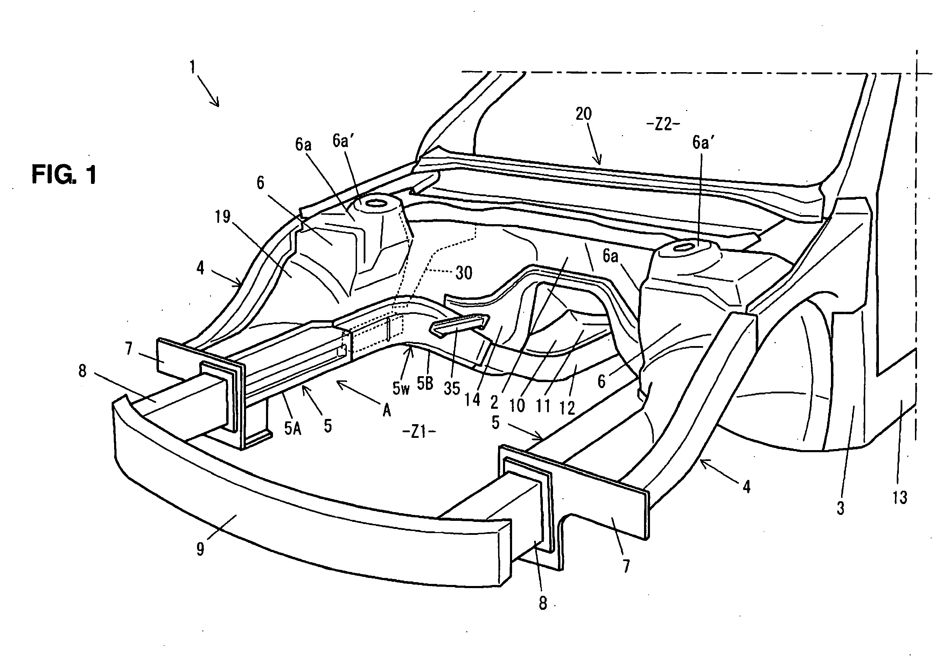

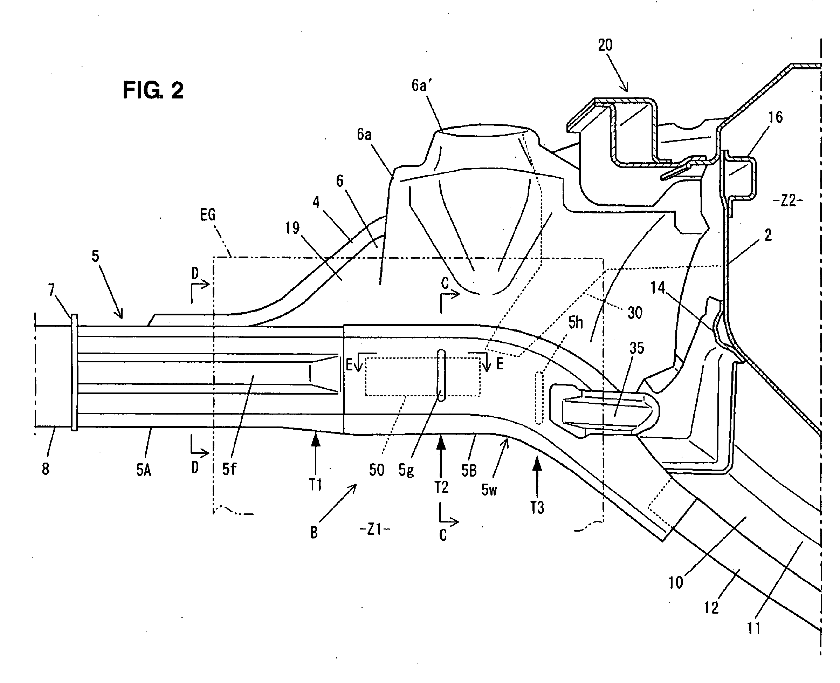

As shown in FIGS. **1** and **2****,** a dash panel **2** which at least partly partitions an engine room **Z1** with an engine **EG** from a vehicle compartment **Z2** in which a passenger is present is or is to be provided at a front portion of an automotive vehicle **1** of the present embodiment.

One or more, preferably a pair of hinge pillars **3** (only one of them is illustrated) which extends substantially vertically and pivotally supports front doors (not illustrated) is provided at or near both-side end portions of the dash panel **2.**

One or more, preferably a pair of apron reinforcements **4, 4** substantially extends forward from upper end portions of the hinge pillars **3.** One or more, preferably a pair of front side frames **5, 5** substantially extends in a vehicle longitudinal direction preferably substantially in parallel to the apron reinforcements **4, 4** in a plan view so as to be away from each other substantially in a vehicle width direction. A wheel house **6** for a front wheel is at least partly provided between the apron reinforcement **4** and the front side frame **5** in the vehicle width direction.

Plates **7, 7,** which are of a plate shape, are to be attached to respective front end portions of the front side frames **5** and the apron reinforcements **4.** At least one bumper reinforcement **9** is attached to the right and left plates **7, 7** via one or more crush cans **8, 8** so as to substantially extend in the vehicle width direction. The crush cans **8, 8** are configured to be crushable substantially in the vehicle longitudinal direction when a longitudinal impact load acts thereon.

A lower portion of the dash panel **2** curves substantially rearward, and its lower end portion connects to a front end portion of a floor panel **10.** A tunnel portion **11** is provided at or near the lower portion of the dash panel **2** and the floor panel **10** so as to extend substantially longitudinally at the intermediate or central portion in the vehicle width direction and project upward.

A rear portion of the front side frame **5** curves substantially downward beside the wheel house **6,** and its lower end portion connects to a front end portion of a floor frame **12** which substantially extends in the vehicle longitudinal direction below the floor panel **10** (FIG. **2**). The floor frame **12,** which preferably has a U-shaped cross section, forms a substantially closed cross section which substantially extends in the vehicle longitudinal direction together with the floor panel **10.**

A side sill **13** extends rearward from a lower end portion of the front hinge pillar 3. The side sill **13** has a substantially closed cross section which substantially extends in the vehicle longitudinal direction.

A lower dash cross member **14** and an upper dash cross member **16** are respectively provided at or near the lower portion and the upper portion of the dash panel **2** so as to interconnect the right and left hinge pillars **3, 3.** These cross members **14, 16** preferably substantially have a U-shaped cross section and/or form a substantially closed cross section along with the dash panel **2.**

The wheel house **6** is formed by making the rear portion of an apron panel **19** project substantially upward. The apron panel **19** connects to the apron reinforcement **4** at its outer end, and it connects to the front side frame 5 at its inner end. At an upper end of the wheel house **6** is provided a suspension tower portion **6a** which is formed by the apron panel **19** projecting upward.

A cowl portion **20** which has a substantially closed cross section extending in the vehicle width direction is formed at the upper portion of the dash panel **2.** The apron reinforcement **4** preferably substantially has a substantially-rectangular closed cross section which extends in the vehicle longitudinal direction.

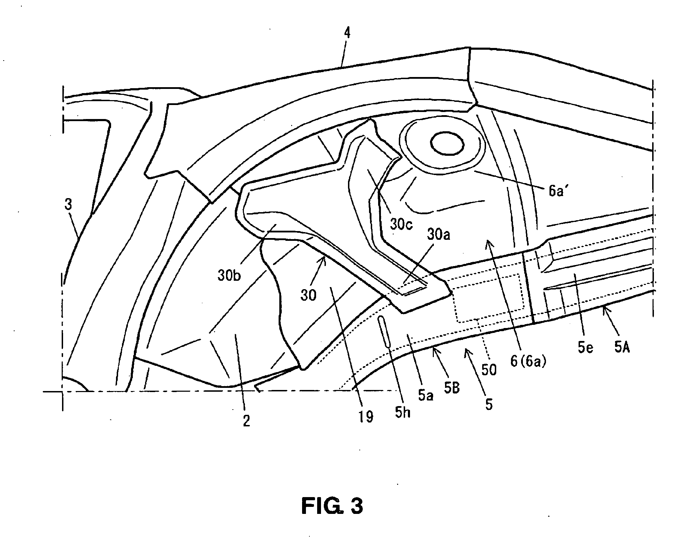

In the present embodiment, as shown in FIG. **3****,** at least one reinforcement member **30** is provided at a back face of the apron panel **19** at the wheel house **6** which is on an opposite side to the engine room **Z1.**

The reinforcement member **30** connects to an outer member **51** (facing toward the inside of the wheel house **6**) of the front side frame **5** at its front end portion **30a,** and substantially extends obliquely rearward and upward. A rear side portion of the reinforcement member **30** preferably branches to a rear portion and an upper portion. An end portion **30b** of the rear portion connects to the dash panel **2** (vehicle body member), and an end portion **30c** of the upper portion connects to an inner face of a top portion **6a'** of the suspension tower portion **6a.** The reinforcement member **30** preferably has a substantially U-shaped cross section which opens toward the inside of the vehicle, and forms a closed cross section along with the apron panel **19.**

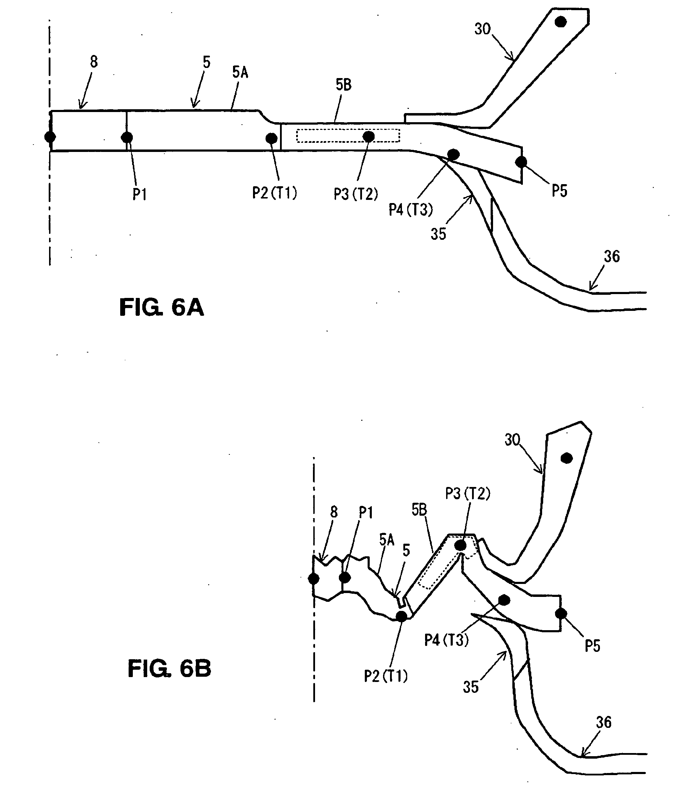

Further, as apparent from FIGS. **1** and **2****,** a second reinforcement member **35** preferably with a U-shaped cross section is provided so as to interconnect the rear portion of the front side frame **5** and the lower dash cross member **14.** Further, as shown in FIG. **6** which will be described later, a front end portion of a tunnel frame **36** which extends substantially in the vehicle longitudinal direction along the tunnel portion **11** connects to a rear end portion of the second reinforcement member **35.**

Hereinafter, the structure of the front side frame **5** will be described specifically.

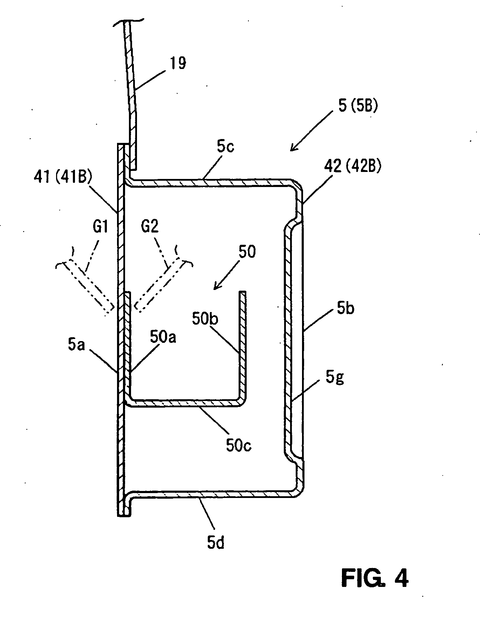

The front side frame **5** is, as shown in FIG. **4****,** formed by joining or connecting an outside member **41** which is of a flat plate shape and located outward of the vehicle to an inside member **42** which preferably has a U-shaped cross section and is located inward of the vehicle. Thus, the front side frame **5** has left and right side face portions **5a, 5b** and upper and lower horizontal face portions **5c, 5d** so as to preferably have a substantially-rectangular cross section which substantially extends in the vehicle longitudinal direction.

Herein, the front side frame **5** comprises a front portion **5A** in front of the suspension tower portion **6a** and a rear portion **5B** in back of the suspension tower portion **6a** as apparent from FIGS. **1** and **2****.** The front and rear portions **5A, 5B** preferably are made from different materials from each other. For example, the front portion **5A** may be made from a material, such as a high-tension material, which can maintain a specified (predetermined or predeterminable) rigidity at a normal condition and collapse like a bellows shape when receiving an impact load acting. Meanwhile, the rear portion **5B** may be made from a thicker material so that the load resistance of this portion **5B** can be greater than that of the front portion **5A.** That is, the rear portion **5B** does not collapse so easily compared to the front portion **5A.**

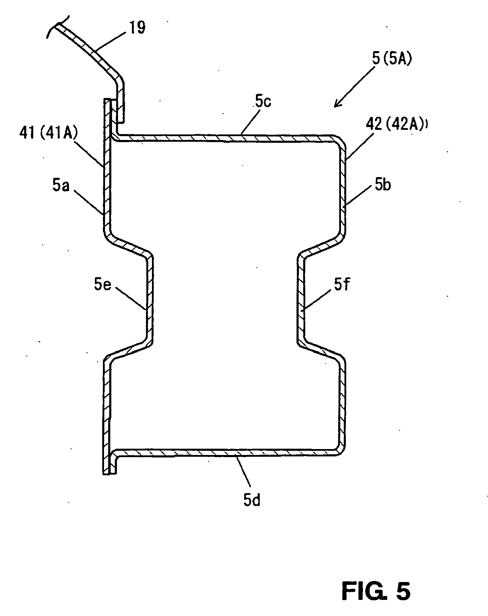

Further, at an outside member **41A** and an inside member **42A** of the front portion **5A** are respectively formed one or more beads **5e, 5f** which substantially extend in the vehicle longitudinal direction as apparent from FIGS. **1****,** **2** and **5****.** These beads **5e, 5f** are provided to absorb the impact energy greatly when the front portion **5A** of the front side frame **5** collapses in the vehicle longitudinal direction.

As shown in FIGS. **1** and **4****,** the width (length in the vehicle width direction) of the rear portion of the front portion **5A** of the front side frame **5** preferably becomes narrow gradually. Accordingly, when the impact load acts on the front side frame **5** from the vehicle front, this rear portion of the front portion **5A** tends to bend outward (toward the vehicle outside) easily. Thus, a bend portion **T1** which is operative to bend outward is provided at the rear portion of the front portion **5A** of the front side frame **5** as shown in FIGS. **2** and **6****.**

Further, as shown in FIG. **2****,** at least one bead **5g** which extends substantially vertically is formed at the inside side face portion **5b** of the front side frame **5** beside the suspension tower portion **6a.** The bead **5g** is recessed outward (toward the vehicle outside) as shown in FIG. **4****,** so that when the impact load acts on the front side frame **5** from the vehicle front, the front side frame **5** bends substantially outward with a bending point of the bead **5g.** Thus, the bend portion **T2** is formed or defined by the bead **5g.**

Further, as shown in FIGS. **2** and **3****,** at least one bead **5h** which substantially extends vertically is formed at the outside side face portion **5a** of the front side frame **5** at a curve portion **5w.** The bead **5h** is substantially recessed inward (toward the vehicle inside) so that when the impact load acts on the front side frame **5** from the vehicle front, the front side frame **5** bends substantially outward with a bending point of the bead **5h.** Thus, the bend portion **T3** is formed or defined by the bead **5h.**

According to the above-described structure, when the impact load is inputted to the bumper reinforcement **9** at a frontal collision or the like of the automotive vehicle **1,** the impact load acts on the front side frames **5, 5** substantially via the crush cans **8, 8.**

Then, each crush can **8** collapses substantially in the vehicle longitudinal direction as shown in **6A,** which shows its initial state, and **6B.** As described above, the front portion (longitudinal positions **P1-P2**) of the front side frame 5 which is in front of the suspension tower portion **6a** collapses substantially in the longitudinal direction, and the front side frame 5 bends substantially outward at the bend portions **T1, T2** and **T3** (longitudinal positions **P2, P3** and **P4**). Specifically, a specified (predetermined or predeterminable) portion of the front side frame **5** between the longitudinal positions **P2** and **P4** bends substantially outward at the bend portion **T2** (longitudinal position **P3).** Part of the impact load is absorbed by this collapsing and bending. Herein, the longitudinal position **P1** is a position of the front end of the front side frame **5,** the longitudinal position **P2** is a position in which the width of the front side frame **5** reduces (bend portion **T1),** the longitudinal position **P3** is a position of the bead **5g** (bend portion **T2),** the longitudinal position **P4** is a position of the bead **5h** (bend portion **T3),** and the longitudinal position **P5** is a position of the rear end of the front side frame **5.**

Further, since the reinforcement member **30** is provided, part of the impact load is dispersed to the dash panel **2** and the top portion **6a'** of the suspension tower **6a.** As a result, it is prevented that the frame **5** is deformed vertically or broken at the curve portion **5w.**

Further, since the second reinforcement member **35** is provided, it is prevented that the front side frame **5** bends inward at the bend portion **T3,** so that the front side frame **5** can be made bend outward surely.

Also, since the left and right front side frames **5, 5** bend outward respectively, the frames **5, 5** which have bent does not contact the engine **EG.** In other words, the impact energy can be absorbed without contacting the engine **EG** provided between the left and right frames **5, 5.**

Also, since the bend portion **T2** is comprised of the bead **5g** which is formed at the inside face portion **5b** of the front side frame **5** so as to extend vertically in such a manner that the bead **5g** is recessed outward, the bending point and direction is stabilized.

Herein, in the present embodiment, as shown in FIG. **2****,** at least one reinforcement member **50** is provided inside the front side frame **5** at a space which includes (or at least partly corresponds to) the above-described bend portion **T2** of the front side frame **5.** The reinforcement member **50** preferably is provided only for the bend portion **T2** which has the greatest bending amount among the bend portions **T1-T3.**

The reinforcement member **50** comprises, as shown in FIG. **4****,** left and right side face portions **50a, 50b** and a horizontal face portion **50c** which is provided at a lower side between the side face portions **50a, 50b** so as to preferably substantially have a U-shaped cross section which opens upward.

The outside side face portion **50a** of the reinforcement member **50** is joined to the outside face portion **5a** of the front side frame **5.** Meanwhile, the inside side face portion **50b** is located at a position which is closer to the inside side face portion **5b** of the front side frame **5** than the outside side face portion **5a.**

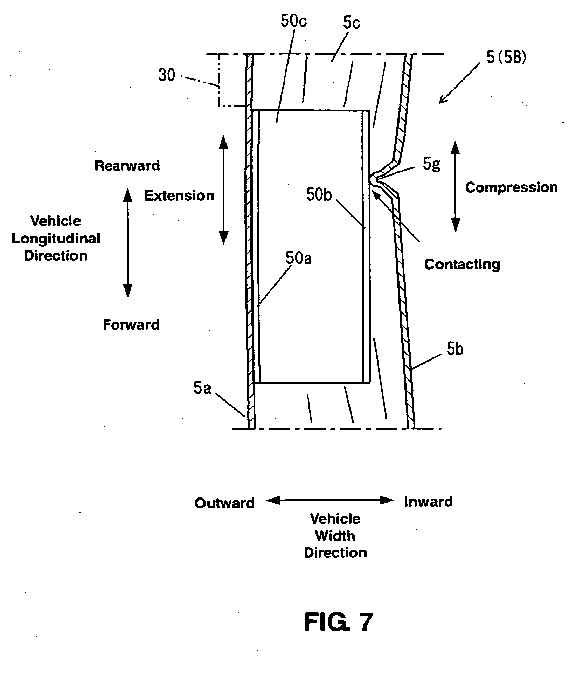

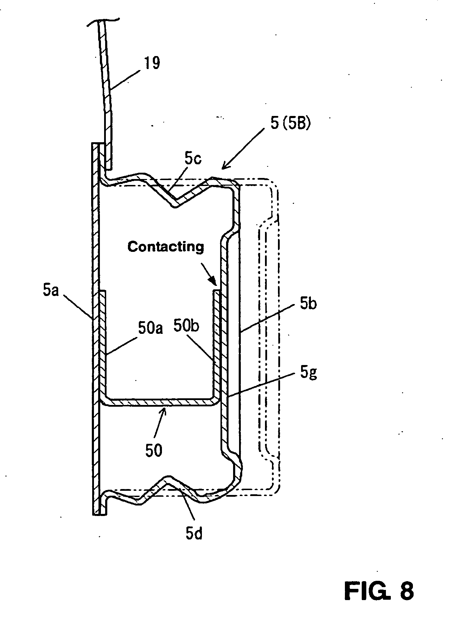

Herein, when the front side frame **5** bends outward at the bend portion **T2,** as shown in FIG. **7****,** a force of an extension direction in the vehicle longitudinal direction is applied to the outside side face portion **5a** and a force of a compression direction is applied to the inside side face portion **5b.** Since the reinforcement member **50** is provided at the outside side face portion **5a,** the stress concentrates in the area around the bead **5g** of the inside side face portion **5b.** As a result, as shown in FIG. **8** as well, the horizontal face portions **5c, 5d** are deformed, and the tip of the bead **5g** comes to contact the inside side face portion **50b** of the reinforcement member **50.**

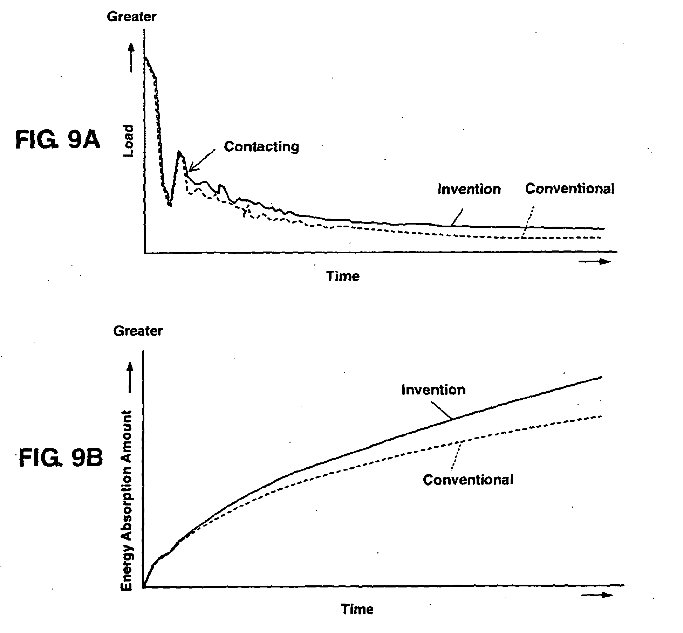

As described above, according to the present embodiment, since the reinforcement member **50** is provided inside the front side frame **5** at the space which includes (or at least partly corresponds to) the bend portion **T2** in such a manner that the reinforcement member **50** preferably comes to contact the inner face of the side face portion **5b** of the front side frame **5** during the bending, the bending of the front side frame **5** can be properly restrained from progressing abruptly after contacting. Further, since the reinforcement member **50** is deformed after the contacting, the deformation load can be increased as shown in FIG. **9A** and the amount of energy absorption can be properly increased as shown in FIG. **9B****,** compared to a case in which no reinforcement member is provided.

Further, since the inside side face portion **50b** preferably is or is to be located at the position which is closer to the inside side face portion **5b** of the front side frame **5** than the outside side face portion **5b,** the contacting of the reinforcement member **50** and the frame **5** can be made occur as properly soon as possible. Thus, the amount of energy absorption can be increased further properly.

Further, since the reinforcement member **50** is configured as described above, the increase of the energy absorption can be achieved with a simpler structure of the reinforcement member **50.** Further, the outside side face portion **50a** of the reinforcement member **50** may be easily attached to the outside side face portion **5a** of the frame **5** via welding using guns **G1, G2.**

Also, since the reinforcement member **30** preferably is provided substantially in the vehicle longitudinal direction in such a manner that its front end portion connects to the front side frame **5** at the location which is right behind (or adjacent to) the rear end of the reinforcement member **50** and its rear end portion connects to the dash panel **2** and the suspension tower portion **6a** behind the frame **5,** the rear end portion of the frame **5** can be reinforced. Further, part of the energy absorption can be performed by the reinforcement member, so that flexibility of setting the longitudinal length of the reinforcement member **50** and the like can be improved.

Further, since the reinforcement member **50** preferably is provided only for the bend portion **T2** which has the greatest bending amount among the bend portions **T1-T3,** the amount of energy absorption can be increased efficiently restraining the weight increase by the reinforcement member **50.**

While the reinforcement member **50** comprises the left and right side face portions **50a, 50b** and the lower horizontal face portion **50c** so as to have the U-shaped cross section in the present embodiment, it may be configured to have the both side face portions and an upper horizontal face portion so as to have a reverse-U-shaped cross section.

Accordingly, a reinforcement member **50** is provided inside a frame member **5** at a space which includes a bend portion **T2** operative to bend upon a substantially longitudinal force acting thereon (e.g. due to a head-on collision) in such a manner that the reinforcement member **50** comes to substantially contact an inner face of an inside side face portion **5b** of the frame member **5** as the frame member **5** bends at the bend portion **T2.** Accordingly, the amount of energy absorption even after the bending start of the frame member can be properly increased.

Hereinafter, other embodiments will be described. Herein, the structure except the reinforcement member is similar or the same as the above-described first embodiment. The similar or same structure is denoted by the same reference characters, and their descriptions will be omitted here.

### EMBODIMENT 2

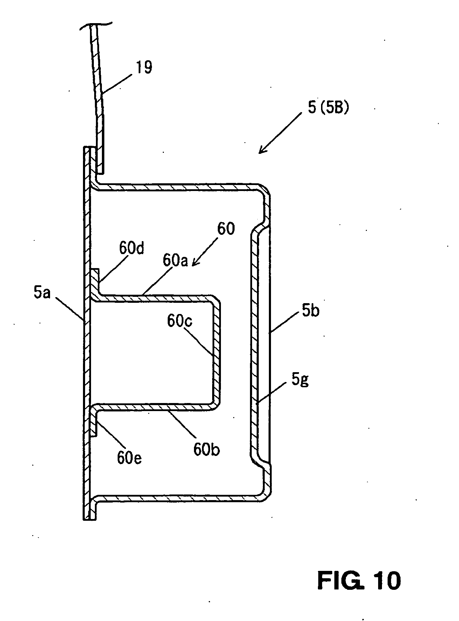

In a second embodiment, as shown in FIG. **10****,** a reinforcement member **60** comprises upper and lower horizontal face portions **60a, 60b,** a side face portion **60c** which is provided at inward end portions of the horizontal face portions **60a, 60b,** and flange portions **60d, 60e** which are provided at outward end portions of the horizontal portions **60a, 60b.** Thus, the reinforcement member **60** preferably substantially has a U-shaped cross section which opens outward. The flange portions **60d, 60e** are welded to the outside side face portion **5a** of the front side frame, so that the reinforcement member **60** forms a closed cross section extending in the vehicle longitudinal direction together with the outside side face portion **5a.**

The inside side face portion **60c** is or is to be located at a position which is closer to the inside side face portion **5b** of the front side frame **5** than the outside side face portion **5a.** Thereby, the side face portion **60c** of the reinforcement member **60** contacts the inner face of the inside side face portion **5b** of the front side frame **5** as properly soon as possible when the front side frame **5** bends outward at the bend portion **T2.**

According to the second embodiment, since the reinforcement member **60** is or is to be attached to the outside side face portion **5a** of the front side frame **5** so as to form the substantially closed cross section substantially extending in the longitudinal direction together with the outside side face portion **5a,** the rigidity of the reinforcement member **60** is increased, so that the amount of energy absorption with the contacting can be further increased.

### EMBODIMENT 3

A third embodiment will be described.

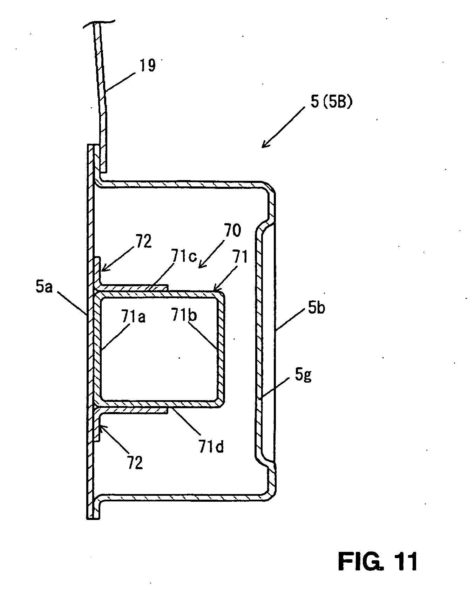

In the third embodiment, as shown in FIG. **11****,** a reinforcement member **70** comprises a substantially rectangular pipe member **71** which comprises left and right side face portions **71a, 71b** and upper and lower horizontal face portions **71c, 71d** and has a closed cross section extending in the vehicle longitudinal direction and a pair of brackets **72, 72** which is fixed to outside portions of the horizontal face portions **71c, 71d.** The brackets **72, 72** are connected (preferably welded) to the outside side face portion **5a** of the front side frame **5.**

The inside side face portion **71b** is located at a position which is closer to the inside side face portion **5b** of the front side frame **5** than the outside side face portion **5a.** Thereby, the side face portion **71b** of the reinforcement member **70** contacts the inner face of the inside side face portion **5b** of the front side frame **5** as properly soon as possible when the front side frame **5** bends outward at the bend portion **T2.**

According to the third embodiment, since the reinforcement member **70** is attached to the outside side face portion **5a** of the front side frame **5** and singly forms the substantially closed cross section extending in the longitudinal direction, the increase of the amount of energy absorption can be achieved regardless of the shape, thickness or the like of the front side frame **5.**

### EMBODIMENT 4

A fourth embodiment will be described.

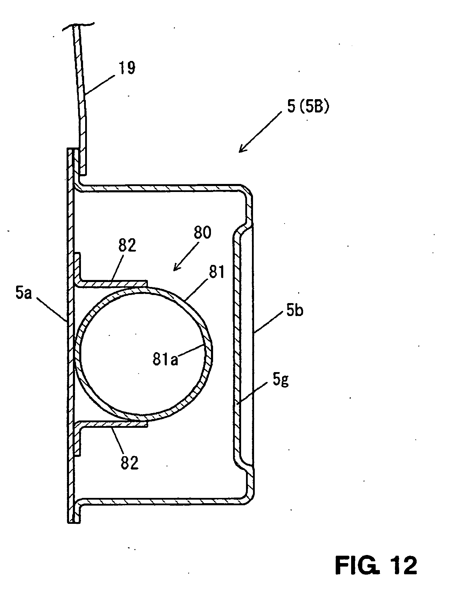

In the fourth embodiment, as shown in FIG. **12****,** a reinforcement member **80** comprises a substantially circular or round pipe member **81** which has a substantially closed cross section extending in the vehicle longitudinal direction and a pair of brackets **82, 82** which is or is to be fixed to upper and lower of the circular pipe member **81.** The brackets **82, 82** are welded to the outside side face portion **5a** of the front side frame **5.**

An inside end portion **81a** of the circular pipe member **81** is or is to be located at a position which is closer to the inside side face portion **5b** of the front side frame **5** than the outside side face portion **5a.** Thereby, the inside end portion **81 a** of the reinforcement member **80** contacts the inner face of the inside side face portion **5b** of the front side frame **5** as properly soon as possible when the front side frame **5** bends outward at the bend portion **T2.**

According to the fourth embodiment, since the reinforcement member **80** preferably is attached to the outside side face portion **5a** of the front side frame **5** and singly forms the closed cross section extending in the longitudinal direction, the increase of the amount of energy absorption can be achieved regardless of the shape, thickness or the like of the front side frame **5** like the third embodiment.

### EMBODIMENT 5

A fifth embodiment will be described.

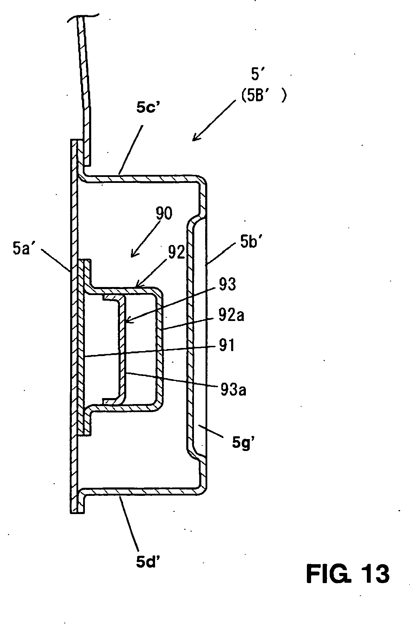

In the fifth embodiment, as shown in FIG. **13****,** the width of a front side frame **5'** preferably is set to be narrower than that of the front side frame of the first through fourth embodiments e.g. for the reason of the size of vehicle. Accordingly, the amount of energy absorption by the front side frame **5'** itself is relatively small compared to the first through fourth embodiments. The fifth embodiment includes some measure against this matter.

At least one reinforcement member **90** has plural closed cross sections which extend substantially in the vehicle longitudinal direction. Specifically, the reinforcement member **90** comprises an outside face member **91** which is or is to be attached to an outside side face portion **5a'** of the front side frame **5'** and provided substantially in parallel to this face portion **5a',** at least one substantially U-shaped-cross-section member **92** which is or is to be attached to the outside face member **91** and has a face portion **92a** which is substantially in parallel to an inside side face portion **5b',** and a section-partition member **93** which has a face portion **93a** in parallel to the inside side face portion **5b'** operative to at least partly partition an inside space formed by these members **91, 92** into two parts in the vehicle width direction. Herein, the front side frame **5'** has its upper and lower horizontal face portions **5c', 5d'** like the above-described front side frame **5.** Also, a bead **5g'** is formed at the inner side face portion **5b'** likewise.

According to the fifth embodiment, since the reinforcement member **90** forms two or more closed cross sections together with the front side frame **5'** or singly in such a manner that the two or more closed cross sections extend in the vehicle longitudinal direction and at least partly overlap with each other in the vehicle width direction, the amount of energy absorption with the contacting can be further increased. Further, since the two closed cross sections at least partly overlap with each other in the vehicle width direction, the rigidity for the bending in the vehicle width direction is not increased improperly compared to a case in which the two closed cross sections are configured to overlap with each other in the vertical direction.

## Claims

1. A frame structure for an automotive vehicle **(1),** comprising:
a hollow frame member **(5; 5')** provided so as to extend substantially in a vehicle longitudinal direction and connect to a dash panel **(2)** at a rear end portion thereof, the frame member **(5; 5')** having both-side side face portions **(5a, 5b; 5a', 5b')** and upper and lower horizontal face portions **(5c, 5d; 5c', 5d')** so as to have a substantially-rectangular cross section, the frame member **(5; 5')** having a bend portion **(T2)** which is operative to bend toward one side substantially in a vehicle width direction when a longitudinal impact load acts thereon;
**characterized by** at least one reinforcement member **(50; 60; 70; 80; 90)** provided inside said frame member **(5; 5')** at a space which includes the bend portion **(T2)** of the frame member **(5; 5')** in such a manner that the reinforcement member **(50; 60; 70; 80; 90)** is off an inner face of one of the side face portions **(5b; 5b')** of the frame member **(5; 5')** which is located on a side opposite to said one side toward which the bend portion bends in an initial state and the reinforcement member **(50; 60; 70; 80; 90)** comes to contact the inner face of the one of the side face portions **(5b; 5b')** of the frame member **(5; 5')** as the frame member **(5; 5')** bends at the bend portion **(T2)** during an action of the impact load.

2. The frame structure for an automotive vehicle **(1)** of claim 1, wherein said reinforcement member **(50; 60; 70; 80; 90)** is configured such that a portion thereof **(50b; 60c; 71b; 81a; 92b)** which is operative to come to contact said frame member **(5; 5')** is located at a position which is closer to said one of the side face portions **(5b; 5b')** of the frame member **(5; 5')** than the other of the side face portions **(5a; 5a')** of the frame member **(5; 5').**

3. The frame structure for an automotive vehicle **(1)** of any one of the preceding claims, wherein said reinforcement member **(50)** comprises both-side side face portions **(50a, 50b)** and a horizontal face portion **(50c)** which is provided at either a lower side or an upper side between the both-side side face portions **(50a, 50b)** thereof so as to have a U-shaped or reverse-U-shaped cross section, and the reinforcement member **(50)** is configured such that one of the side face portions **(50a)** of the reinforcement member **(50)** which is located on said one side toward which the bend portion **(T2)** bends is joined to said one of the side face portions **(5a)** of the frame member **(50)** and the other of the side face portions **(50b)** of the reinforcement member **(50)** comes to contact said inner face of the one of the side face portions **(5b)** of the frame member **(5)** as the bend portion bends during the action of the impact load.

4. The frame structure for an automotive vehicle **(1)** of any one of the preceding claims, wherein said reinforcement member **(60)** is attached to said one of the side face portions **(5a)** of the frame member **(5)** in such a manner that a closed cross section is formed together with the one of the side face portions **(5a)** of the frame member **(5).**

5. The frame structure for an automotive vehicle **(1)** of any one of the preceding claims, wherein said reinforcement member **(70; 80; 90)** is attached to said one of the side face portions **(5a; 5a')** of the frame member **(5; 5')** in such a manner that a closed cross section is formed therewith singly.

6. The frame structure for an automotive vehicle **(1)** of any one of the preceding claims, wherein said reinforcement member **(90)** forms two closed cross sections together with the frame member **(5')** or singly in such a manner that the two closed cross sections extend in the vehicle longitudinal direction and at least partly overlap with each other in the vehicle width direction.

7. The frame structure for an automotive vehicle **(1)** of any one of the preceding claims, wherein said frame member **(5; 5')** is comprised of a pair of frame members which are located away from each other in the vehicle width direction, a vehicle constituting member **(EG)** is provided between the pair of frame members **(5, 5; 5', 5')**, and the pair of frame members have respective bend portions **(T2)** which are operative to bend outward of the vehicle respectively.

8. The frame structure for an automotive vehicle **(1)** of anyone of the preceding claims, wherein said bend portion **(T2)** of the frame member **(5; 5')** comprises a bead **(5g; 5g')** which is formed at said one of the side face portions **(5b; 5b')** of the frame member **(5; 5')** so as to extend substantially vertically in such a manner that the bead **(5g; 5g')** is recessed toward said one side in the vehicle width direction which is a bending direction of the bend portion **(T2).**

9. The frame structure for an automotive vehicle **(1)** of claim 8, wherein at least one reinforcement member **(30)** is provided substantially in the vehicle longitudinal direction in such a manner that a front end portion thereof connects to said frame member **(5; 5')** at a location which is right behind a rear end of said reinforcement member and a rear end portion thereof connects to a vehicle-body constituting member **(2, 6a)** behind the frame member **(5; 5').**

10. The frame structure for an automotive vehicle **(1)** of any one of claims 1 through 9, wherein said bend portion of the frame member **(5; 5')** is comprised of a plurality of portions **(T1, T2, T3)** which have different bending amounts, and said reinforcement member **(50; 60; 70; 80; 90)** is provided only for one of the portions **(T2)** which has the greatest bending amount.

11. An automotive vehicle **(1)** comprising a frame structure according to any one of the preceding claims.

12. A method of providing a frame structure for an automotive vehicle **(1),** comprising the steps of:
providing a hollow frame member **(5; 5')** so as to extend substantially in a vehicle longitudinal direction and connect to a dash panel **(2)** at a rear end portion thereof, the frame member **(5; 5')** having both-side side face portions **(5a, 5b; 5a', 5b')** and upper and lower horizontal face portions **(5c, 5d; 5c', 5d')** so as to have a substantially-rectangular cross section, the frame member **(5; 5')** having a bend portion **(T2)** which is operative to bend toward one side substantially in a vehicle width direction when a longitudinal impact load acts thereon;
**characterized by** providing at least one reinforcement member **(50; 60; 70; 80; 90)** inside said frame member **(5; 5')** at a space which includes the bend portion **(T2)** of the frame member **(5; 5')** in such a manner that the reinforcement member **(50; 60; 70; 80; 90)** is off an inner face of one of the side face portions **(5b; 5b')** of the frame member **(5; 5')** which is located on a side opposite to said one side toward which the bend portion bends in an initial state and the reinforcement member **(50; 60; 70; 80; 90)** comes to contact the inner face of the one of the side face portions **(5b; 5b')** of the frame member **(5; 5')** as the frame member **(5; 5')** bends at the bend portion **(T2)** during an action of the impact load.

## Patentansprüche

1. Rahmenstruktur für ein Fahrzeug (1), umfassend
ein hohles Rahmenglied (5; 5'), das so vorgesehen ist, dass es sich im Wesentlichen in einer Fahrzeuglängsrichtung erstreckt und mit einer Trennwand bzw. Armaturenbrettplatte (2) an einem hinteren Endabschnitt davon verbunden ist, wobei das Rahmenglied (5; 5') beidseitige Seitenflächenabschnitt (5a, 5b; 5a', 5b') und einen oberen und einen unteren horizontalen Flächenabschnitte (5c, 5d; 5c', 5d') aufweist, um einen im Wesentlichen rechteckigen Querschnitt aufzuweisen, wobei das Rahmenglied (5; 5') einen gebogenen Abschnitt bzw. Biegeabschnitt (T2) aufweist, der wirksam ist, um sich zu einer Seite hin im Wesentlichen in einer Fahrzeugbreitenrichtung zu biegen, wenn eine Längsaufpralllast auf diesen wird;
**gekennzeichnet durch** zumindest ein Verstärkungsglied (50; 60; 70; 80; 90), das im Inneren des Rahmenglieds (5; 5') an einem Ort bzw. Raum vorgesehen ist, der den Biegeabschnitt (T2) des Rahmenglieds (5; 5') auf eine solche Weise enthält, dass das Verstärkungsglied (50; 60; 70; 80; 90) von einer Innenfläche von einem der Seitenflächenabschnitte (5b; 5b') des Rahmenglieds (5; 5') entfernt ist bzw. vor dieser liegt, das sich auf einer Seite gegenüberliegend bzw. entgegengesetzt zu der einen Seite befindet, zu der sich der gebogene Abschnitt in einem Anfangszustand biegt, und das Verstärkungsglied (50; 60; 70; 80; 90) mit der Innenfläche des einen der Seitenflächenabschnitte (5b; 5b') des Rahmenglieds (5; 5') in Kontakt kommt, wenn sich das Rahmenglied (5; 5') an dem Biegeabschnitt (T2) während eines Einwirkens der Aufpralllast biegt.

2. Rahmenstruktur für ein Fahrzeug (1) nach Anspruch 1, wobei das Verstärkungsglied (50; 60; 70; 80; 90) derart konfiguriert ist, dass sich ein Abschnitt davon (50b; 60c; 71b; 81a; 92b), der wirksam ist, um mit dem Rahmenglied (5; 5') in Kontakt zu kommen, an einer Position befindet, die näher an dem einen der Seitenflächenabschnitte (5b; 5b') des Rahmenglieds (5; 5') ist als der andere der Seitenflächenabschnitte (5a; 5a') des Rahmenglieds (5; 5').

3. Rahmenstruktur für ein Fahrzeug (1) nach einem der vorhergehenden Ansprüche, wobei das Verstärkungsglied (50) beidseitige Seitenflächenabschnitte (50a, 50b) und einen horizontalen Flächenabschnitt (50c) umfasst, der entweder an einer unteren Seite oder einer oberen Seite zwischen den beidseitigen Seitenflächenabschnitten (50a, 50b) davon so vorgesehen ist, dass er einen U-förmigen oder umgekehrtes U-förmigen Querschnitt aufweist, und das Verstärkungsglied (50) so konfiguriert ist, dass einer der Seitenflächenabschnitte (50a) des Verstärkungsglieds (50), der sich auf der einen Seite befindet, zu der hin sich der Biegeabschnitt (T2) biegt, mit dem einen der Seitenflächenabschnitte (5a) des Rahmenglieds (50) verbunden ist und der andere der Seitenfächenabschnitte (50b) des Verstärkungsglieds (50) mit der Innenfläche des einen der Seitenflächenabschnitte (5b) des Rahmenglieds (5) in Kontakt kommt, wenn sich der gebogene Abschnitt während des Einwirkens der Aufpralllast biegt.

4. Rahmenstruktur für ein Fahrzeug (1) nach einem der vorhergehenden Ansprüche, wobei das Verstärkungsglied (60) an dem einen der Seitenflächenabschnitte (5a) des Rahmenglieds (5) auf eine solche Weise angebracht ist, dass ein geschlossener Querschnitt zusammen mit dem einen der Seitenflächenabschnitte (5a) des Rahmenglieds (5) gebildet ist.

5. Rahmenstruktur für ein Fahrzeug (1) nach einem der vorhergehenden Ansprüche, wobei das Verstärkungsglied (70; 80; 90) an dem einen der Seitenflächenabschnitte (5a; 5a') des Rahmenglieds (5; 5') auf eine solche Weise angebracht ist, dass ein geschlossener Querschnitt einzeln damit gebildet ist.

6. Rahmenstruktur für ein Fahrzeug (1) nach einem der vorhergehenden Ansprüche, wobei das Verstärkungsglied (90) zwei geschlossene Querschnitte zusammen mit dem Rahmenglied (5') oder einzeln auf eine solche Weise bildet, dass sich die zwei geschlossenen Querschnitte in der Fahrzeuglängsrichtung erstrecken und sich zumindest teilweise in der Fahrzeugbreitenrichtung überlappen.

7. Rahmenstruktur für ein Fahrzeug (1) nach einem der vorhergehenden Ansprüche, wobei das Rahmenglied (5; 5') aus einem Paar Rahmengliedern besteht, die sich voneinander entfernt in der Fahrzeugbreitenrichtung befinden, wobei ein das Fahrzeug bildendes bzw. darstellendes Glied (EG) zwischen dem Paar Rahmengliedern (5, 5; 5', 5') vorgesehen ist und das Paar Rahmenglieder jeweilige Biegeabschnitte (T2) aufweist, die wirksam sind, um sich jeweils von dem Fahrzeug nach außen bzw. außerhalb des Fahrzeugs zu biegen.

8. Rahmenstruktur für ein Fahrzeug (1) nach einem der vorhergehenden Ansprüche, wobei der Biegeabschnitt (T2) des Rahmenglieds (5; 5') eine Wulst (5g; 5g') umfasst, die an dem einen der Seitenflächenabschnitte (5b; 5b') des Rahmenglieds (5; 5') so gebildet ist, dass sie sich im Wesentlichen vertikal auf eine solche Weise erstreckt, dass die Wulst (5g; 5g') zu der einen Seite hin in der Fahrzeugbreitenrichtung vertieft ist, die eine Biegerichtung des Biegeabschnitts (T2) ist.

9. Rahmenstruktur für ein Fahrzeug (1) nach Anspruch 8, wobei zumindest ein Verstärkungsglied (30) im Wesentlichen in der Fahrzeuglängsrichtung auf eine solche Weise vorgesehen ist, dass ein vorderer Endabschnitt davon mit dem Rahmenglied (5; 5') an einer Stelle verbunden ist, die sich direkt hinter einem hinteren Ende des Verstärkungsglieds befindet, und ein hinterer Endabschnitt davon mit einem den Fahrzeugkörper bildenden bzw. darstellenden Glied (2, 6a) hinter dem Rahmenglied (5; 5') verbunden ist.

10. Rahmenstruktur für ein Fahrzeug (1) nach einem der Ansprüche 1 bis 9, wobei der Biegeabschnitt des Rahmenglieds (5; 5') aus einer Mehrzahl von Abschnitten (T1, T2, T3) besteht, die unterschiedliche Biegebeträge bzw. -grade aufweisen, und das Verstärkungsglied (50; 60; 70; 80; 90) nur für einen der Abschnitte (T2) vorgesehen ist, der den größten Biegebetrag aufweist.

11. Fahrzeug (1) umfassend eine Rahmenstruktur nach einem der vorhergehenden Ansprüche.

12. Verfahren zum Bereitstellen eines Rahmenglieds für ein Fahrzeug (1), umfassend die Schritte:
Bereitstellen eines hohlen Rahmenglieds (5; 5'), damit es sich im Wesentlichen in einer Fahrzeuglängsrichtung erstreckt und mit einer Trennwand bzw. Armaturenbrettplatte (2) an einem hinteren Endabschnitt davon verbunden ist, wobei das Rahmenglied (5; 5') beidseitige Seitenflächenabschnitte (5a, 5b; 5a', 5b') und einen oberen und einen unteren horizontalen Flächenabschnitt (5c, 5d; 5c', 5d') aufweist, um einen im Wesentlichen rechteckigen Querschnitt aufzuweisen, wobei das Rahmenglied (5; 5') einen gebogenen Abschnitt bzw. Biegeabschnitt (T2) aufweist, der wirksam ist, um sich zu einer Seite hin im Wesentlichen in einer Fahrzeugbreitenrichtung zu biegen, wenn eine Längsaufpralllast auf diesen wird;
**gekennzeichnet durch** Bereitstellen von zumindest einem Verstärkungsglied (50; 60; 70; 80; 90) im Inneren des Rahmenglieds (5; 5') an einem Ort bzw. Raum, der den Biegeabschnitt (T2) des Rahmenglieds (5; 5') auf eine solche Weise enthält, dass das Verstärkungsglied (50; 60; 70; 80; 90) von einer Innenfläche von einem der Seitenflächenabschnitte (5b; 5b') des Rahmenglieds (5; 5') entfernt ist bzw. vor dieser liegt, das sich auf einer Seite gegenüberliegend bzw. entgegengesetzt zu der einen Seite befindet, zu der sich der gebogene Abschnitt in einem Anfangszustand biegt, und das Verstärkungsglied (50; 60; 70; 80; 90) mit der Innenfläche des einen der Seitenflächenabschnitte (5b; 5b') des Rahmenglieds (5; 5') in Kontakt kommt, wenn sich das Rahmenglied (5; 5') an dem Biegeabschnitt (T2) während eines Einwirkens der Aufpralllast biegt.

## Revendications

1. Structure de cadre pour un véhicule automobile (1), comprenant :
un élément de cadre creux (5 ; 5') fourni de manière à s'étendre sensiblement dans une direction longitudinale du véhicule et à se raccorder à un tablier (2) dans une partie d'extrémité arrière de celui-ci, l'élément de cadre (5 ; 5') comportant des parties de faces latérales des deux côtés (5a, 5b ; 5a', 5b') et des parties de faces horizontales supérieures et inférieures (5c, 5d ; 5c', 5d') disposées de telle sorte qu'elles forment une section transversale sensiblement rectangulaire, l'élément de cadre (5 ; 5') ayant une partie de courbure (T2) qui est efficace pour plier vers une face sensiblement dans une direction de largeur du véhicule lorsqu'une charge d'impact longitudinale agit sur celle-ci ;
**caractérisé par** au moins un élément de renforcement (50 ; 60 ; 70 ; 80 ; 90) fourni à l'intérieur dudit élément de cadre (5 ; 5') dans un espace incluant la partie de courbure (T2) de l'élément de cadre (5 ; 5') de telle sorte que l'élément de renforcement (50 ; 60 ; 70 ; 80 ; 90) est hors d'une surface intérieure d'une des parties de faces latérales (5b ; 5b') de l'élément de cadre (5 ; 5') qui est situé sur une face opposée à ladite face vers laquelle plie la partie de courbure dans un état initial, et l'élément de renforcement (50 ; 60 ; 70 ; 80 ; 90) vient en contact avec la face intérieure de l'une des parties de faces latérales (5b ; 5b') de l'élément de cadre (5 ; 5') lorsque l'élément de cadre (5 ; 5') plie au niveau de la partie de courbure (T2) pendant une action de la charge d'impact.

2. Structure de cadre pour un véhicule automobile (1) selon la revendication 1, dans laquelle ledit élément de renforcement (50 ; 60 ; 70 ; 80 ; 90) est configuré de telle sorte qu'une partie de celui-ci (50b ; 60c ; 71b ; 81a ; 92b) qui est efficace pour venir en contact avec ledit élément de cadre (5 ; 5') est située dans une position plus proche de ladite une des parties de faces latérales (5b ; 5b') de l'élément de cadre (5 ; 5') que de l'autre des parties de faces latérales (5a ; 5a') de l'élément de cadre (5 ; 5').

3. Structure de cadre pour un véhicule automobile (1) selon l'une quelconque des revendications précédentes, dans laquelle ledit élément de renforcement (50) comprend des parties de faces latérales des deux côtés (50a, 50b) et une partie de face horizontale (50c) qui est fournie soit sur une face inférieure soit sur une face supérieure entre les parties de faces latérales des deux côtés (50a, 50b) de celui-ci, de manière à présenter une forme en U ou une section transversale en U inversé, et l'élément de renforcement (50) est configuré de telle sorte qu'une des parties de faces latérales (50a) de l'élément de renforcement (50) qui est situé sur ladite une face vers laquelle plie la partie de courbure (T2) est reliée à ladite une des parties de faces latérales (5a) de l'élément de cadre (50) et l'autre des parties de faces latérales (50b) de l'élément de renforcement (50) vient en contact avec ladite face intérieure de l'une des parties de faces latérales (5b) de l'élément de cadre (5) lorsque la partie de courbure plie pendant l'action de la charge d'impact.

4. Structure de cadre pour un véhicule automobile (1) selon l'une quelconque des revendications précédentes, dans laquelle ledit élément de renforcement (60) est fixé à ladite une des parties de faces latérales (5a) de l'élément de cadre (5) de manière à ce qu'une section transversale fermée soit formée conjointement avec l'une des parties de faces latérales (5a) de l'élément de cadre (5).

5. Structure de cadre pour un véhicule automobile (1) selon l'une quelconque des revendications précédentes, dans laquelle ledit élément de renforcement (70 ; 80 ; 90) est fixé à ladite une des parties de faces latérales (5a ; 5a') de l'élément de cadre (5 ; 5') de manière à ce qu'une section transversale fermée ne forme qu'une seule pièce avec celle-ci.

6. Structure de cadre pour un véhicule automobile (1) selon l'une quelconque des revendications précédentes, dans laquelle ledit élément de renforcement (90) forme deux sections transversales fermées conjointement avec l'élément de cadre (5') ou une seule pièce, de telle sorte que les deux sections transversales fermées s'étendent dans la direction longitudinale du véhicule et se chevauchent au moins partiellement dans la direction de largeur du véhicule.

7. Structure de cadre pour un véhicule automobile (1) selon l'une quelconque des revendications précédentes, dans laquelle ledit élément de cadre (5 ; 5') est constitué d'une paire d'éléments de cadre qui sont éloignés l'un de l'autre dans la direction de largeur du véhicule, un élément de constitution du véhicule (EG) étant fourni entre la paire d'éléments de cadre (5, 5 ; 5', 5'), et la paire d'éléments de cadre comportant des parties de courbure respectives (T2) qui sont efficaces pour plier vers l'extérieur du véhicule respectivement.

8. Structure de cadre pour un véhicule automobile (1) selon l'une quelconque des revendications précédentes, dans laquelle ladite partie de courbure (T2) de l'élément de cadre (5 ; 5') comprend une nervure (5g ; 5g') qui est formée sur ladite une des parties de faces latérales (5b ; 5b') de l'élément de cadre (5 ; 5') de manière à s'étendre sensiblement verticalement de telle sorte que la nervure (5g ; 5g') est évidée vers ladite une face dans la direction de largeur du véhicule qui est une direction de pliage de la partie de courbure (T2).

9. Structure de cadre pour un véhicule automobile (1) selon la revendication 8, dans laquelle au moins un élément de renforcement (30) est fourni sensiblement dans la direction longitudinale du véhicule de telle sorte qu'une partie d'extrémité avant de celui-ci est reliée audit élément de cadre (5 ; 5') à un emplacement qui est juste derrière une extrémité arrière dudit élément de renforcement et une partie d'extrémité arrière de celui-ci est reliée à un élément de constitution de la carrosserie du véhicule (2, 6a) derrière l'élément de cadre (5; 5').

10. Structure de cadre pour un véhicule automobile (1) selon l'une quelconque des revendications 1 à 9, dans laquelle ladite partie de courbure de l'élément de cadre (5 ; 5') est constituée d'une pluralité de parties (T1, T2, T3) qui présentent différents niveaux de pliage, et ledit élément de renforcement (50 ; 60 ; 70 ; 80 ; 90) est fourni uniquement pour une des parties (T2) qui présente le niveau de pliage le plus important.

11. Véhicule automobile (1) comprenant une structure de cadre selon l'une quelconque des revendications précédentes.

12. Procédé pour fournir une structure de cadre pour véhicule automobile (1), comprenant les étapes suivantes :
la fourniture d'un élément de cadre creux (5 ; 5') de manière à ce qu'il s'étende sensiblement dans une direction longitudinale du véhicule et se raccorde à un tablier (2) dans une partie d'extrémité arrière de celui-ci, l'élément de cadre (5 ; 5') comportant des parties de faces latérales des deux côtés (5a, 5b; 5a', 5b') et des parties de faces horizontales supérieures et inférieures (5c, 5d ; 5c', 5d') disposées de telle sorte qu'elles forment une section transversale sensiblement rectangulaire, l'élément de cadre (5 ; 5') ayant une partie de courbure (T2) qui est efficace pour plier vers une face sensiblement dans une direction de largeur du véhicule lorsqu'une charge d'impact longitudinale agit sur celui-ci ;
**caractérisé par** la fourniture d'au moins un élément de renforcement (50 ; 60 ; 70 ; 80 ; 90) à l'intérieur dudit élément de cadre (5 ; 5') dans un espace incluant la partie de courbure (T2) de l'élément de cadre (5 ; 5'), de telle sorte que l'élément de renforcement (50 ; 60 ; 70 ; 80 ; 90) est hors d'une surface intérieure d'une des parties de faces latérales (5b ; 5b') de l'élément de cadre (5 ; 5') qui est situé sur une face opposée à ladite face vers laquelle plie la partie de courbure dans un état initial, et l'élément de renforcement (50 ; 60 ; 70 ; 80 ; 90) vient en contact avec la face intérieure de l'une des parties de faces latérales (5b ; 5b') de l'élément de cadre (5 ; 5') lorsque l'élément de cadre (5 ; 5') plie au niveau de la partie de courbure (T2) pendant une action de la charge d'impact.
